# EUROPÄISCHE PATENTSCHRIFT

(11) **EP 3 380 418 B1**
(45) Veröffentlichungstag und Bekanntmachung des Hinweises auf die Patenterteilung: **29.04.2020**
(21) Anmeldenummer: 16790298.0
(22) Anmeldetag: 20.10.2016
(51) Int. Cl.: B65G 39/12

(54) **TRAGROLLENGESTELL MIT SCHWENKRAHMEN UND WAAGERECHT AUSGERICHTETEN FÜHRUNGS- UND HALTESCHLITZEN**
SUPPORT ROLLER RACK HAVING PIVOT FRAMES AND HORIZONTAL GUIDING AND RETAINING SLITS
CHÂSSIS DE ROULEAUX DE SUPPORT MUNI D'UN CADRE PIVOTANT ET DE FENTES DE GUIDAGE ET DE RETENUE HORIZONTALES

(30) Priorität: 20.10.2015 DE 202015105558 U; 21.10.2015 DE 202015105592 U
(43) Veröffentlichungstag der Anmeldung: 03.10.2018
(73) Patentinhaber: Artur Küpper GmbH & Co. KG, 42553 Velbert (DE); Schaeffler Technologies AG & Co. KG, 91074 Herzogenaurach (DE)
(72) Erfinder: SCHWANDTKE, Rolf, 42549 Velbert (DE); MOTZKAU, Uwe, 97941 Tauberbischofsheim (DE)
(74) Vertreter: Viering, Jentschura & Partner mbB Patent- und Rechtsanwälte
(86) Internationale Anmeldenummer: PCT/EP2016/075252
(87) Internationale Veröffentlichungsnummer: WO 2017/068055

(56) Entgegenhaltungen:
- EP-A1- 2 058 249
- BE-A5- 1 020 521
- DE-T2- 60 116 340
- JP-A- 2005 225 677
- JP-B2- 3 127 117
- KR-B1- 100 822 414

## Beschreibung

Die Erfindung richtet sich auf ein Tragrollengestell einer Förderbandanlage, die mehrere in Reihe angeordnete und das Förderband auf Tragrollen tragende Tragrollengestelle umfasst, wobei in mindestens einem dieser Tragrollengestelle vorzugsweise jeweils mindestens vier trogartig zueinander angeordnete Tragrollen drehbar und auswechselbar gehalten und vorzugsweise in am jeweiligen Tragrollengestell ausgebildeten länglichen, einendseitig eine Einschuböffnung aufweisenden Führungs- und Halteschlitzen mit den Enden ihrer jeweiligen Achse gelagert sind, wobei mindestens eine erste und eine zweite Tragrolle mit Abstand zu einander auf einem, um eine quer zur Förderbandlängsrichtung verlaufende Schwenkachse verschwenkbar und mittig in dem mindestens einen Tragrollengestell gelagerten Schwenkrahmen mittig und im Wesentlichen waagerecht ausgerichtet in dem mindestens einen Tragrollengestell angeordnet sind und vorzugsweise an dem Schwenkrahmen seitlich und sich gegenüberliegend jeweils mindestens eine dritte und eine vierte Tragrolle mit jeweils zum Rand des mindestens einen Tragrollengestells (1) hin aufwärts geneigter Anstellung angeordnet sind.

Insbesondere große und lange Förderbandanlagen weisen Förderbänder auf, die über mehrere hundert Meter in Tragrollengestellen geführt verlaufen. Dabei liegt das jeweilige Förderband oder der jeweilige Fördergurt auf in einem jeden Traggestell ausgebildeten Tragrollen auf, die das gegebenenfalls mit Schüttgut beladene Förderband abstützen. Aber auch ein unbeladenes Band liegt in der Regel auf den Tragrollen auf. Die einzelnen Tragrollen sind in dem jeweiligen Tragrollengestell mit jedem ihrer beiden gegenüberliegenden Achsenden jeweils in einem Führungs- und Halteschlitz drehbar gehalten und gelagert. Die Schlitze sind vertikal und somit im Wesentlichen parallel zum Verlauf der Erdanziehungskraft ausgerichtet, so dass die von einem Förderband, das gegebenenfalls mit Schüttgut beladen ist, jeweils auf eine Tragrolle ausgeübte Kraft, von dem geschlossenen Endbereich eines jeweiligen Führungs- und Halteschlitzes, wo das jeweils zu haltende Achsende gelagert ist, gut aufgenommen und abgestützt werden kann. Diesem geschlossenen Ende gegenüberliegend ist jeweils eine Einschuböffnung ausgebildet, durch welche hindurch das in dem jeweiligen Führungs- und Halteschlitz gehaltene Achsende aus diesem entfernt werden kann.

Wenn nun aber eine solche Tragrolle gewechselt und die Achsenden aus den jeweils zugeordneten Führungs- und Halteschlitzen entfernt werden sollen, so geht dies nur dann, wenn vorher das Förderband zumindest um einen solchen Betrag angehoben wird, dass die Achsenden aus dem vertikal ausgerichteten und verlaufenden Führungs- und Halteschlitzen nach oben herausgehoben werden können. Dies ist insofern nachteilig, als ein Tragrollenwechsel somit einen nicht unerheblichen Aufwand bedingt. Insbesondere muss hier mit entsprechend schwerem Werkzeug gearbeitet werden, damit das gegebenenfalls noch mit Schüttgut beladene Förderband angehoben werden kann. Besonders problematisch ist dies bei Förderbandanlagen, die zumindest einige Tragrollengestelle aufweisen, in welchen mittig ein nach Art einer Wippe verschwenkbar angeordneter Schwenkrahmen angeordnet ist, der an seinen in Förderbandlängsrichtung beabstandeten Enden jeweils mindestens eine Tragrolle trägt. Derartige gattungsgemäße Tragrollengestelle sind aus der DE 601 16 340 T2 sowie der US 6,550,606 B2 bekannt.

In der Regel verursachen bei derartigen Tragrollengestellen die das Anheben des Förderbandes ermöglichenden Maßnahmen höhere Kosten, als für die jeweils auszutauschende Rolle an sich zu bezahlen wäre.

Der Erfindung liegt daher die Aufgabe zu Grunde, eine Lösung zu schaffen, die es ermöglicht, eine Tragrolle in einem Tragrollengestell mit einem gegenüber dem Stand der Technik verminderten Aufwand zu wechseln.

Bei einem Tragrollengestell der eingangs näher bezeichneten Art wird diese Aufgabe durch die Merkmale des Anspruchs 1 gelöst.

Dadurch, dass die jeweils ein Achsende einer Tragrolle haltenden Führungs- und Halteschlitze zumindest im Wesentlichen waagerecht und parallel zum Verlauf des von Ihnen getragenen Förderbandes verlaufend ausgerichtet sind, ist es möglich, die Tragrollen unterhalb und längs des Förderbandes aus ihren jeweiligen Führungs- und Halteschlitzen zu bewegen, ohne das Förderband anheben zu müssen. Da sich der Tragrollenmantel jeweils relativ zur Tragrollenachse dreht, können die Tragrollen somit jeweils problemlos aus ihren Führungs- und Halteschlitzen herausgezogen werden.

Durch den Einsatz des Schwenkrahmens ist gewährleistet, dass immer beide ggf. angetriebenen Tragrollen den gleichen Anpressdruck des Gurtes/Förderbandes erfahren und somit eine gleichmäßige Kraftübertragung stattfindet.

Ein weiterer Vorteil der Erfindung besteht in der Möglichkeit, bei bestehendem Stahlbau (Tragrollengestellen, Tragrollenstationen), die im Durchmesser größeren, ggf. angetriebenen Tragrollen einzusetzen, d. h. die vorhandenen mittigen Einzelrollen eines Tragrollengestells durch den Schwenkrahmen mit den zwei ggf. angetriebenen Tragrollen auszutauschen.

Aufgrund der Möglichkeit, Tragrollen ohne ein Anheben des Förderbandes wechseln zu können, lassen sich insbesondere elektrisch angetriebene Rollen, die ggf. häufiger gewechselt werden müssen, vorteilhaft zum Einsatz bringen, da einem Wechsel keine großen Probleme mehr gegenüberstehen. Die Erfindung sieht daher vor, dass zumindest die in dem Schwenkrahmen angeordneten Tragrollen, elektrisch angetrieben sind und einen elektrischen Eigenantrieb aufweisen.

Die Erfindung ermöglicht es auch, mittig größere Rollendurchmesser als seitlich im Tragrollengestell einzusetzen. Die Erfindung zeichnet sich in Weiterbildung daher auch dadurch aus, dass der Außendurchmesser der auf dem Schwenkrahmen gelagerten Tragrollen größer als der Außendurchmesser der seitlichen Tragrollen ausgebildet ist.

Zweckmäßig ist es hierbei, wenn der Außendurchmesser der auf dem Schwenkrahmen gelagerten Tragrollen 200 - 400 mm, insbesondere 230 - 350 mm, vorzugsweise 270 - 290 mm, beträgt, was die Erfindung ebenfalls vorsieht.

Um während des Betriebs der Förderbandanlage ein besonders gutes Anlegen des Förderbandes an die Tragrollen des Schwenkrahmens zu gewährleisten und damit besonders gute Kraftübertragungsverhältnisse zu ermöglichen, ist es gemäß weiterer Ausgestaltung der Erfindung von Vorteil, dass der Abstand der auf dem Schwenkrahmen gelagerten Tragrollen zueinander in Richtung quer zur Schwenkachse und in Längsrichtung des Förderbandes 50 - 200 mm, insbesondere 75 -150 mm, vorzugsweise 90 - 120 mm, beträgt.

Von Vorteil ist es weiterhin, wenn zumindest die auf dem Schwenkrahmen gelagerten Tragrollen eine haftungs- und reibungserhöhende Oberfläche, vorzugsweise eine Oberfläche aus einem gummiartigen Material, aufweisen, was die Erfindung ebenfalls vorsieht.

Um alle an einem Tragrollengestell jeweils vorhandenen Tragrollen bequem wechseln zu können, zeichnet sich die Erfindung weiterhin dadurch aus, dass alle jeweils ein Achsenende einer Tragrolle aufnehmenden Führungs- und Halteschlitze in dem mindestens einen oder jeweiligen Tragrollengestell mit ihrer von der Einschuböffnung ausgehenden Längserstreckung zumindest im Wesentlichen parallel zur Förderbandlängsrichtung ausgerichtet ausgebildet und angeordnet sind.

Zweckmäßig ist es weiterhin wenn auch die Schwenkachse des Schwenkrahmens entsprechend auswechselbar gelagert ist. Die Erfindung sieht daher in weiterer vorteilhafter Ausgestaltung auch vor, dass die Schwenkachse des Schwenkrahmens in dem Tragrollengestell in Führungs- und Halteschlitzen gelagert ist, die mit ihrer von der Einschuböffnung ausgehenden Längserstreckung zumindest im Wesentlichen parallel zur Förderbandlängsrichtung ausgerichtet ausgebildet und angeordnet sind.

Um an einem jeweiligen Tragrollengestell vorhandenen Tragrollen an den jeweils gewünschten Positionen fixiert in dem jeweiligen Tragrollengestell anordnen und anbringen zu können, ist es gemäß Weiterbildung der Erfindung von Vorteil, dass die Führungs- und Halteschlitze zumindest teilweise jeweils im Kopfbereich eines an dem Tragrollengestell befestigten Halteelements, insbesondere Halteblechs, ausgebildet sind. Mithilfe derartiger Haltebleche lassen sich die Positionen der Führungs- und Halteschlitze im Tragrollengestell ausgezeichnet festlegen.

Um zu verhindern, dass beim Betrieb der Förderbandanlage das laufende Förderband eine Tragrolle aus ihren jeweiligen Führungs- und Halteschlitzen herauszieht, ist einem jeden Führungs- oder Halteschlitz ein den Einschubquerschnitt der Einschubsöffnung verschließendes oder blockierendes Sicherungselement zugeordnet. Die Erfindung zeichnet sich in weiterer Ausgestaltung schließlich daher dadurch aus, dass jeder Einschuböffnung eines Führungs- und Halteschlitzes ein die Einschuböffnung blockierendes und das Herausrutschen eines in den jeweiligen Führungs- und Halteschlitz eingeführten Achsendes einer Tragrolle verhinderndes Sicherungselement zugeordnet ist. Die Erfindung ist nachstehend anhand einer Zeichnung näher erläutert. Diese zeigt in
- Fig. 1: ein Tragrollengestell,
- Fig. 2: schematisch die Anordnung eines Schwenkrahmens in dem Tragrollengestell,
- Fig. 3: einen Führungs- und Halteschlitz eines Tragrollengestells,
- Fig. 4: die Einführung einer Tragrolle in einen Führungs- und Halteschlitz,
- Fig. 5: die Sicherung des Achsendes einer Tragrolle in dem Führungs- und Halteschlitz mittels eines Splints und in
- Fig.6: ein Ende des Schwenkrahmens in schematischer Darstellung.

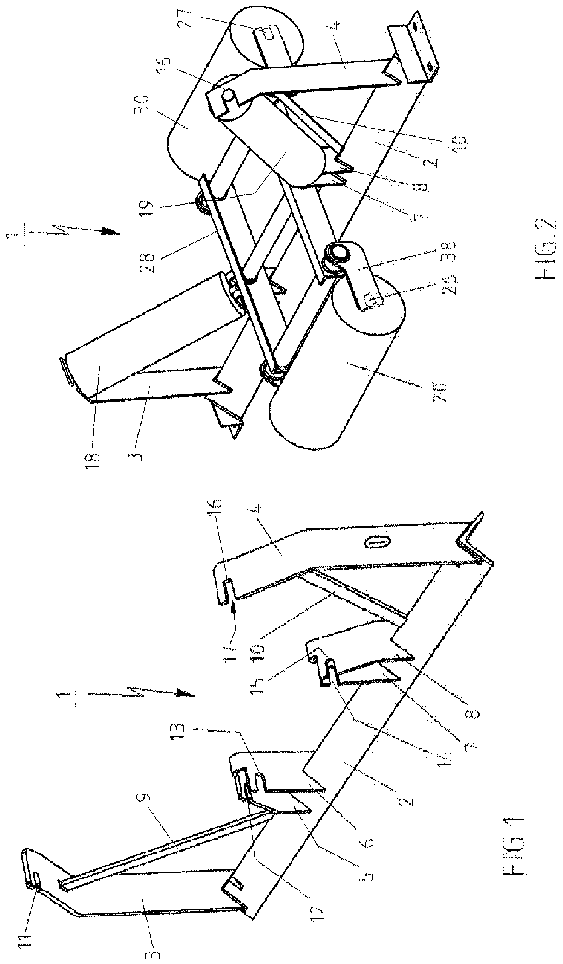

Die Fig. 1 zeigt ein insgesamt mit 1 bezeichnetes Tragrollengestell, das ein bodenseitiges Standblech 2 und sechs sich aufwärts nach oben erstreckende Haltebleche 3-8 aufweist. Das Standblech 2 ist winkelförmig ausgebildet und auf der Winkelspitze liegen Streben 9, 10 auf, die die äußeren Haltebleche 3, 4 stützen. Die Haltebleche 3 - 8 sind in ihrem Fußbereich an die Winkelform des Standbleches 2 angepasst und sind die Winkelspitze umgreifend sich auf den Flanken des Standbleches 2 abstützend an diesem befestigt. In ihrem Kopfbereich weisen die Haltebleche 3 - 8 jeweils einen Führungs- und Halteschlitz 11 - 16 auf. Die Führungs- und Halteschlitze 11 - 16 sind länglich ausgebildet und weisen einendseitig jeweils eine Einschuböffnung 17 auf. Wie aus der Figur 2 ersichtlich ist, ist in den Führungs- und Halteschlitzen 13 und 14 ein Schwenkrahmen 28 mit seiner Schwenkachse 29 gehalten und gelagert. Der Schwenkrahmen 28 ist somit mittig und annähernd waagerecht in dem Tragrollengestell 1 angeordnet und kann um die Schwenkachse 29 verschwenkt werden. In Längsrichtung des auf den Tragrollen 18, 19, 20 und 30 aufliegenden Förderbandes 31 sind an dem Schwenkrahmen 28 die erste Tragrolle 20 und die zweite Tragrolle 30 mittig und ebenfalls im Wesentlichen waagerecht ausgerichtet angeordnet. Dabei sind die erste Tragrolle 20 und die zweite Tragrolle 30 mit ihren jeweiligen Achsenden 21 in ebenfalls waagerecht und im Wesentlichen parallel zur Förderbandlängsrichtung ausgerichtet ausgebildeten Führungs- und Halteschlitzen gelagert, wobei in der Figur 2 von den jeweils gegenüberliegenden Führungs- und Halteschlitzen der Führungs- und Halteschlitz 26 der ersten Tragrolle 20 und der Führungs- und Halteschlitz 27 der zweiten Tragrolle 30 dargestellt sind. Die Wippe bzw. der Schwenkrahmen 28 ist um seine Schwenkachse 29 in dem Tragrollengestell 2 in den Halteblechen 6 und 7 in den dortigen Führungs- und Halteschlitzen 13 und 14 gelagert und Bewegungen des auf den Rollen 20 und 30 aufliegenden Förderbandes 31 aufnehmend auf und ab schwenkbar. Wie aus der Figur 2 ersichtlich ist, ist die Schwenkachse 29 quer zur Längsrichtung des Förderbandes 31 ausgerichtet und parallel zu den durch die jeweilige Rollenlängsachse gebildeten Längsachsen der seitlich angeordneten dritten und vierten Tragrolle 18, 19 ausgerichtet. Die seitlichen dritte Tragrolle 18 und vierte Tragrolle 19 sind schräg geneigt zum Rand des Tragrollengestells 1 ansteigend ausgerichtet. Alle vier Tragrollen, d. h. die erste Tragrolle 20, die zweite Tragrolle 30, die dritte Tragrolle 18 und die vierte Tragrolle 19 sind mit ihren Achsenden 21 jeweils in einem Führungs- und Halteschlitz rotationsfest gehalten, so dass der jeweilige Tragrollenmantel der jeweiligen Tragrolle 18, 19, 20, 30 um die jeweilige Tragrollenachse rotieren kann. Eine jede Tragrolle 18-20, 30 ist somit jeweils zwischen zwei gegenüberliegenden Führungs- und Halteschlitzen drehbar gelagert. Dabei ist jeweils ein Achsende 21 der beiden gegenüberliegenden Enden der Tragachse der dritten und vierten Tragrolle 18, 19 in einem Führungs- und Halteschlitz 11,12, 14,15 zweier gegenüberliegender Haltebleche 3, 5 und 4,8 eingeführt und rotationsfest gehalten. Die Haltebleche 6,7 und die darin jeweils ausgebildeten Führungs- und Halteschlitze 13, 14 sind derart angeordnet und ausgerichtet, dass der Schwenkrahmen 28 mit seiner Schenkachse 29 in den Führungs- und Halteschlitzen 13 und 14 gehalten wird, so dass der Schwenkrahmen 28 mit der ersten und zweiten Tragrolle 20, 30 mittig und waagerecht ausgerichtet in dem Tragrollengestell 1 angeordnet ist. Eine dritte Tragrolle 18 ist mit ihren Achsenden 21 in den Führungs- und Halteschlitzen 11 und 12 gelagert und zum Rand des Tragrollengestells 1 hin schräg aufwärts geneigt angestellt. Gegenüberliegend ist in analoger Weise die vierte Tragrolle 19 mit ihren Achsenden 21 in den Führungs- und Halteschlitzen 15, 16 gehalten und ebenfalls mit zum Rand des Tragrollengestells 1 hin aufwärts geneigter Anstellung ausgerichtet. Im Einbauzustand des Tragrollengestells 1 in einer Förderbandanlage liegt auf den Tragrollen 18, 19, 20, 30 das Förderband 31 der Förderbandanlage auf. In ihrer gebrauchsfertigen, in den Führungs- und Halteschlitzen 11,12, 15,16, 26, 27 gelagerten Position sind die vier Tragrollen 18 - 20, 30 dann trogartig zueinander in dem Tragrollengestell 1 angeordnet.

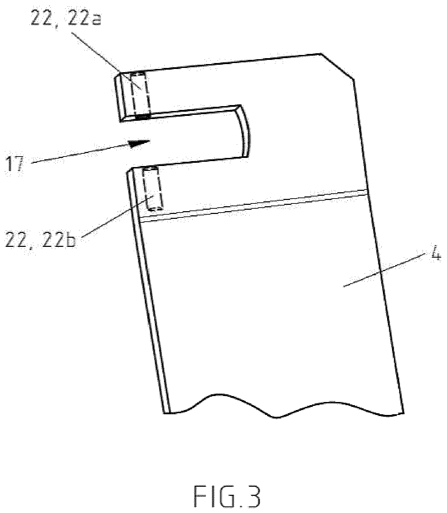

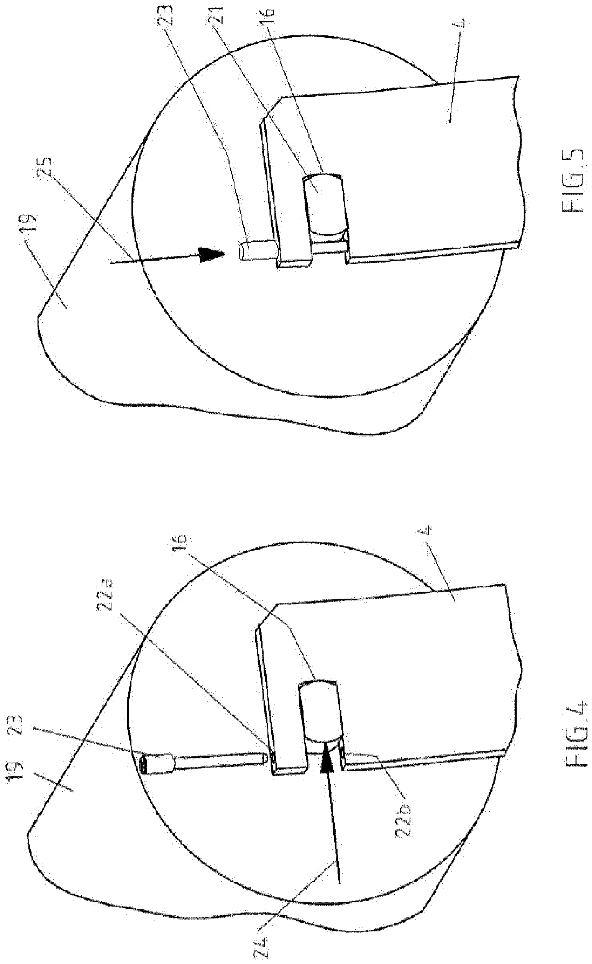

Die Fig. 3 zeigt in gegenüber der Darstellung in der Fig. 1 vergrößerter Darstellung den Führungs- und Halteschlitz 16, der im Kopfbereich des Haltebleches 4 ausgebildet ist. Aus der Fig. 3 ist ersichtlich, dass in dem den Führungs- und Halteschlitz 16 seitlich umgebenden Materialbereich eine Teilbohrungen 22a, 22b umfassende Bohrung 22 ausgebildet ist, in welche ein in den Fig. 4 und 5 dargestellter Splint 23 in sich durch die Einschuböffnung 17 hindurch erstreckender und diese blockierender Weise eingeführt werden kann. In der Gebrauchsposition der jeweiligen Tragrollen 18 - 20, 30 ist dieser Sicherungsstift oder Sicherungssplint 23 als Sicherungselement vorhanden. Während es sich bei der Bohrung 22a um eine bis zur oberen Kante des Halteblechs 4 durchgehende Bohrung handelt, ist die Bohrung 22b als Sackbohrung ausgebildet. Die Achse 21 der vierten Tragrolle 19 wird in Richtung des Pfeiles 24 gemäß Fig. 4 in den zugeordneten Führungs- und Halteschlitz 16 eingeschoben, bis die Achse 21 an das der Einschuböffnung 17 gegenüberliegende Ende des Führungs- und Halteschlitzes 16 anschlägt. Zur Sicherung wird dann von oben in die Bohrung 22a der Sicherungssplint 23 eingeführt und wie durch den Pfeil 25 in Fig. 5 angedeutet, den Öffnungsquerschnitt des Führungs- und Halteschlitzes 16 durchquerend bis zum Endanschlag in die Bohrung 22b eingeschoben. Auf diese Weise ist dann das Achsende 21 gegen ein Herausrutschen aus der Einschuböffnung 17 gesichert. In analoger Weise sind alle Tragrollen in ihrem jeweils zugeordneten Führungs- und Halteschlitz gegen ein Herausrutschen gesichert.

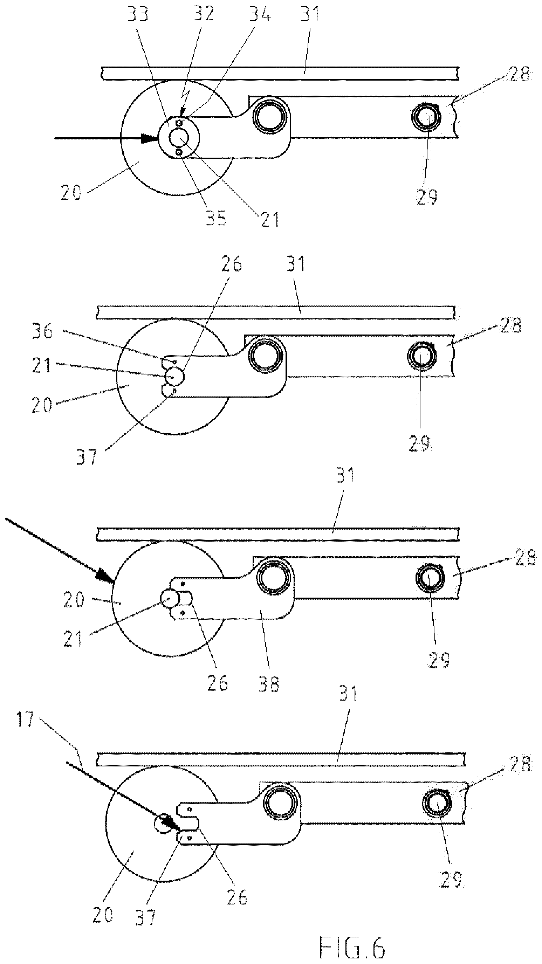

Die Führungs- und Halteschlitze 11 - 16, 26, 27 sind in dem Tragrollengestell 1 derart ausgerichtet angeordnet, dass ihre von der Einschuböffnung 17 ausgehende Längserstreckung zumindest im Wesentlichen parallel zum Verlauf des von den Tragrollen 18 - 20, 30 getragenen Förderbandes 31 ausgerichtet ist, sich die Führungs- und Halteschlitze 11 - 16, 26, 27 also im Wesentlichen parallel zum Verlauf des Förderbandes 31 erstrecken. Auf diese Weise ist es möglich, die vier Tragrollen 18, 19, 20, 30 wie dies in den Fig. 6 angedeutet ist, unterhalb des Förderbandes 31 aus dem jeweiligen Führungs- und Halteschlitz 11,12, 15,16, 26, 27 herauszuziehen oder in den jeweiligen Führungs- und Halteschlitz 11,12, 15,16, 26, 27 einzuschieben, wenn ein Wechsel einer oder aller der Tragrolle 18 - 20, 30 erforderlich ist, ohne dass das auf der jeweiligen Rolle 18, 19, 20, 30 aufliegende Förderband 31 angehoben werden muss. Die, zumindest im Wesentlichen, waagerecht ausgerichtete und, zumindest im Wesentlichen, parallel zum Verlauf des Förderbandes 31 ausgerichtete Positionierung der Führungs- und Halteschlitze 11,12, 15,16, 26, 27 ermöglicht dies.

In gleicher Weise ist auch der Schwenkrahmen 28 in Längsrichtung des Förderbandes 31 unterhalb des Förderbandes 31 aus den die Schwenkachse 29 haltenden Führungs- und Halteschlitzen 13, 15 herausziehbar. Ebenso sind, wie dies in der Figur 6 dargestellt ist, auch die Tragrollen 20, 30 des Schwenkrahmens 28 aus dem Schwenkrahmen 28 herauszuziehen, ohne dass das aufliegende Förderband 31 angehoben werden muss. Der Figur 6 ist im oberen Teilbild zudem eine weitere alternative Ausführungsform eines Sicherungselementes 32 zu entnehmen. Hierbei handelt es sich um eine Ringscheibe 33, die zentral von dem jeweiligen, in einem Führungs- und Halteschlitz 26, 27 gehaltenen Achsende 21 einer jeweiligen Tragrolle 20, 30 durchdrungen ist. Dieses Sicherungselement 32 oder dieser Sicherungsring 33 ist mithilfe von Stiften 34, 35 in entsprechenden Bohrungen 36, 37, die in einem Tragarm 38 neben dem jeweiligen Führungs- und Halteschlitz 26, 27 ausgebildet sind, festgelegt oder festgeschraubt. Die Bohrungen 36, 37 sind an einem die jeweilige Rolle 20, 30 tragenden Tragarmende des Schwenkarms 28 ausgebildet, wobei der Tragarm 38 orts- und rotationsfest an dem Rahmen des Schwenkrahmens 28 befestigt ist.

In nicht dargestellter Weise sind die erste Tragrolle 20 und die zweite Tragrolle 30 mit einem elektrischen Eigenantrieb versehen, der in bekannter Art und Weise jeweils im Innern der Tragrollen 20 und 30 ausgebildet und angeordnet ist. Der Außendurchmesser der ersten Tragrolle 20 und der zweiten Tragrolle 30 ist identisch und jeweils größer als der Außendurchmesser der dritten Tragrolle 18 und der vierten Tragrolle 19, wobei deren Außendurchmesser auch jeweils identisch ist. Der Außendurchmesser der ersten Tragrolle 20 und der zweiten Tragrolle 30 beträgt zwischen 200 und 400 mm, insbesondere zwischen 230 und 350 mm, vorzugsweise zwischen 270 und 290 mm. Der Abstand der ersten Tragrolle 20 und der zweiten Tragrolle 30 in Längsrichtung des Förderbandes 31 zueinander beträgt 50 bis 200 mm, insbesondere 75 bis 150 mm, vorzugsweise 90 bis 120 mm. Zur Erhöhung der von der den Tragrollen 20 und 30 auf die Unterseite des aufliegenden Förderbandes 31 ausübbaren Reibungskräften ist die Oberfläche der Tragrollen 20 und 30 haftungs- und reibungserhöhend ausgebildet. Insbesondere sind diese beiden Tragrollen 20, 30 mit einer Beschichtung aus Gummi oder einem gummiartigen Material versehen.

## Patentansprüche

1. Tragrollengestell (1) einer Förderbandanlage, die mehrere in Reihe angeordnete und ein Förderband (31) auf Tragrollen (18, 19, 20, 30) tragende Tragrollengestelle (1) umfasst, wobei in mindestens einem dieser Tragrollengestelle (1), vorzugsweise jeweils mindestens vier, trogartig zueinander angeordnete Tragrollen (18, 19, 20, 30) drehbar und auswechselbar gehalten und in am jeweiligen Tragrollengestell (1) ausgebildeten, länglichen, einendseitig eine Einschuböffnung (17) aufweisenden Führungs- und Halteschlitzen (11,12, 15,16, 26, 27) mit den Enden (21) ihrer jeweiligen Achse gelagert sind, wobei mindestens eine erste und eine zweite Tragrolle (20, 30) mit Abstand zu einander auf einem, um eine quer zur Förderbandlängsrichtung verlaufende Schwenkachse (29) verschwenkbar und mittig in dem mindestens einen Tragrollengestell (1) gelagerten Schwenkrahmen (28) mittig und im Wesentlichen waagerecht ausgerichtet in dem mindestens einen Tragrollengestell (1) angeordnet sind und an dem Schwenkrahmen (28) seitlich und sich gegenüberliegend jeweils mindestens eine dritte und eine vierte Tragrolle (18, 19) mit jeweils zum Rand des mindestens einen Tragrollengestells (1) hin aufwärts geneigter Anstellung angeordnet sind,
**dadurch gekennzeichnet,**
**dass** zumindest die in dem Schwenkrahmen (28) angeordneten Tragrollen (20, 30) elektrisch angetrieben sind und einen im Innern der Tragrollen (20, 30) ausgebildeten elektrischen Eigenantrieb aufweisen und
**dass** zumindest die Achsenden (21) der mindestens ersten und zweiten Tragrolle (20, 30) in jeweils ein Achsenende (21) einer Tragrolle (20, 30) aufnehmenden Führungs- und Halteschlitzen (26, 27) gelagert sind, die in dem Schwenkrahmen (28) mit ihrer von der Einschuböffnung (17) ausgehenden Längserstreckung zumindest im Wesentlichen parallel zur Förderbandlängsrichtung ausgerichtet ausgebildet und angeordnet sind, so dass die Tragrollen (20, 30) aus dem jeweiligen Führungs- und Halteschlitz (26, 27) herausziehbar und in diesen einschiebbar sind, ohne dass das aufliegende Förderband 31 angehoben werden muss.

2. Tragrollengestell (1) nach Anspruch 1, **dadurch gekennzeichnet, dass** der Außendurchmesser der auf dem Schwenkrahmen (28) gelagerten Tragrollen (20, 30) größer als der Außendurchmesser der seitlichen Tragrollen (18, 19) ausgebildet ist.

3. Tragrollengestell (1) nach einem der vorhergehenden Ansprüche, **dadurch gekennzeichnet, dass** der Außendurchmesser der auf dem Schwenkrahmen (28) gelagerten Tragrollen (20, 30) 200 - 400 mm, insbesondere 230 - 350 mm, vorzugsweise 270 - 290 mm, beträgt.

4. Tragrollengestell (1) nach einem der vorhergehenden Ansprüche, **dadurch gekennzeichnet, dass** der Abstand der auf dem Schwenkrahmen (28) gelagerten Tragrollen (20, 30) zueinander in Richtung quer zur Schwenkachse (29) und in Längsrichtung des Förderbandes (31) 50 - 200 mm, insbesondere 75 - 150 mm, vorzugsweise 90 - 120 mm, beträgt.

5. Tragrollengestell (1) nach einem der vorhergehenden Ansprüche, **dadurch gekennzeichnet, dass** zumindest die auf dem Schwenkrahmen (28) gelagerten Tragrollen (20, 30) eine haftungs- und reibungserhöhende Oberfläche, vorzugsweise eine Oberfläche aus einem gummiartigen Material, aufweisen.

6. Tragrollengestell (1) nach einem der vorhergehenden Ansprüche, **dadurch gekennzeichnet, dass** alle jeweils ein Achsenende (21) einer Tragrolle (18, 19, 20, 30) aufnehmenden Führungs- und Halteschlitze (11,12, 15,16, 26, 27) in dem Tragrollengestell (1) mit ihrer von der Einschuböffnung (17) ausgehenden Längserstreckung zumindest im Wesentlichen parallel zur Förderbandlängsrichtung ausgerichtet ausgebildet und angeordnet sind.

7. Tragrollengestell (1) nach einem der vorhergehenden Ansprüche, **dadurch gekennzeichnet, dass** die Schwenkachse (29) des Schwenkrahmens (28) in dem Tragrollengestell (1) in Führungs- und Halteschlitzen (13, 14) gelagert ist, die mit ihrer von der Einschuböffnung (17) ausgehenden Längserstreckung zumindest im Wesentlichen parallel zur Förderbandlängsrichtung ausgerichtet ausgebildet und angeordnet sind.

8. Tragrollengestell (1) nach einem der vorhergehenden Ansprüche, **dadurch gekennzeichnet, dass** die Führungs- und Halteschlitze (11 - 16) zumindest teilweise jeweils im Kopfbereich eines an dem Tragrollengestell (1) befestigten Halteelements, insbesondere Halteblechs (3 - 8), ausgebildet sind.

9. Tragrollengestell (1) nach einem der vorhergehenden Ansprüche, **dadurch gekennzeichnet, dass** jeder Einschuböffnung (17) eines Führungs- und Halteschlitzes (11,12, 15,16, 26, 27) ein die Einschuböffnung (17) blockierendes und das Herausrutschen eines in den jeweiligen Führungs- und Halteschlitz (11,12, 15,16, 26, 27) eingeführten Achsendes (21) einer Tragrolle (18, 19, 20, 30) verhinderndes Sicherungselement (23, 32) zugeordnet ist.

## Claims

1. A support roller rack (1) of a conveyor belt system, which comprises a plurality of support roller racks (1) arranged in series and supporting a conveyor belt (31) on support rollers (18, 19, 20, 30), wherein preferably in each case at least four support rollers (18, 19, 20, 30) arranged in a trough-like manner relative to one another are held rotatably and replaceably in at least one of said support roller racks (1) and are supported by means of the ends (21) of their respective axle in elongate guiding and retaining slits (11, 12, 15, 16, 26, 27) formed in the respective support roller rack (1) and having an insertion opening (17) at one end, wherein at least one first and one second support roller (20, 30) are arranged centrally and aligned substantially horizontally at a distance from one another in the at least one support roller rack (1), on a pivot frame (28) supported centrally in the at least one support roller rack (1) so as to be pivotable about a pivoting axle (29) extending transversely to the longitudinal direction of the conveyor belt, and in each case at least one third and one fourth support roller (18, 19) are arranged laterally and opposite one another on the pivot frame (28) each in an orientation sloping upward toward the edge of the at least one support roller rack (1),
**characterized**
**in that** at least the support rollers (20, 30) arranged in the pivot frame (28) are driven electrically and comprise a dedicated electric drive formed inside the support rollers (20, 30), and
**in that** at least the axle ends (21) of the at least first and second support rollers (20, 30) are supported in guiding and retaining slits (26, 27), which each accommodate one axle end (21) of a support roller (20, 30), which are formed and arranged in the pivot frame (28) so as to be aligned with the longitudinal extent thereof, starting from the insertion opening (17), at least substantially parallel to the longitudinal direction of the conveyor belt, so that the support rollers (20, 30) can be drawn out of the respective guiding and retaining slit (26, 27) and can be inserted therein without the resting conveyor belt (31) having to be raised.

2. The support roller rack (1) as claimed in claim 1, **characterized in that** the outside diameter of the support rollers (20, 30) supported on the pivot frame (28) is greater than the outside diameter of the lateral support rollers (18, 19).

3. The support roller rack (1) as claimed in one of the preceding claims, **characterized in that** the outside diameter of the support rollers (20, 30) supported on the pivot frame (28) is 200 - 400 mm, in particular 230 - 350 mm, preferably 270 - 290 mm.

4. The support roller rack (1) as claimed in one of the preceding claims, **characterized in that** the distance between the support rollers (20, 30) supported on the pivot frame (28) is 50 - 200 mm, in particular 75 - 150 mm, preferably 90 - 120 mm, in a direction transverse to the pivoting axle (29) and in the longitudinal direction of the conveyor belt (31).

5. The support roller rack (1) as claimed in one of the preceding claims, **characterized in that** at least the support rollers (20, 30) supported on the pivot frame (28) have an adhesion- and friction-increasing surface, preferably a surface composed of a rubber-type material.

6. The support roller rack (1) as claimed in one of the preceding claims, **characterized in that** all the guiding and retaining slits (11, 12, 15, 16, 26, 27) in the support roller rack (1) each accommodating one axle end (21) of a support roller (18, 19, 20, 30), are formed and arranged so as to be aligned with the longitudinal extension thereof, starting from the insertion opening (17), at least substantially parallel to the longitudinal direction of the conveyor belt.

7. The support roller rack (1) as claimed in one of the preceding claims, **characterized in that** the pivoting axle (29) of the pivot frame (28) is supported in the support roller rack (1) in guiding and retaining slits (13, 14) which are formed and arranged so as to be aligned with the longitudinal extension thereof, starting from the insertion opening (17), at least substantially parallel to the longitudinal direction of the conveyor belt.

8. The support roller rack (1) as claimed in one of the preceding claims, **characterized in that** the guiding and retaining slits (11 - 16) are in each case formed at least partially in the head region of a retaining element, in particular retaining plate (3 - 8), secured on the support roller rack (1).

9. The support roller rack (1) as claimed in one of the preceding claims, **characterized in that** each insertion opening (17) of a guiding and retaining slit (11, 12, 15, 16, 26, 27) is assigned a securing element (23, 32), which blocks the insertion opening (17) and prevents an axle end (21) of a support roller (18, 19, 20, 30) inserted into the respective guiding and retaining slit (11, 12, 15, 16, 26, 27) from slipping out.

## Revendications

1. Châssis à rouleaux porteurs (1) d'une installation à bande de convoyage, qui comprend plusieurs châssis rouleaux porteurs (1) disposés en en série et supportant une bande de convoyage (31) sur des rouleaux porteurs (18, 19, 20, 30), dans lequel, dans au moins un de ces châssis à rouleaux porteurs (1), de préférence au moins quatre, rouleaux porteurs (18, 19, 20, 30) disposés entre eux en forme d'auge sont maintenus de manière rotative et interchangeable et sont logés dans une fente de guidage et de maintien (11, 12, 15, 16, 26, 27) allongée, réalisée sur le châssis à rouleaux porteurs (1) respectif, comprenant à une extrémité une ouverture d'insertion (17), avec les extrémités de son axe respectif, dans lequel au moins un premier et un deuxième rouleaux porteurs (20, 30) sont disposés de manière distante entre eux, au centre d'un cadre pivotant (28) logé de manière pivotante autour d'un axe de pivotement (29) s'étendant transversalement par rapport à la direction longitudinale de la bande de convoyage et au centre dans l'au moins un châssis à rouleaux porteurs (1) et orienté de manière globalement horizontale dans l'au moins un châssis à rouleaux porteurs (1) et, au moins un troisième et un quatrième rouleaux porteurs (18, 19) sont disposés latéralement sur le cadre pivotant (28) et face à face avec chacun une position inclinée vers le haut en direction du bord de l'au moins un châssis à rouleaux porteurs (1),
**caractérisé en ce que**
au moins les rouleaux porteurs (20, 30) disposés dans le cadre pivotant (28) sont entraînés électriquement et comprennent leur propre entraînement électrique à l'intérieur des rouleaux porteurs (20, 30) et
au moins les extrémités d'axes (21) des au moins premier et deuxième rouleaux porteurs (20, 30) sont logées dans des fentes de guidage et de maintien (26, 27), logeant chacune une extrémité d'axe (21) d'un rouleau porteur (20, 30), qui sont réalisées et disposées dans le cadre pivotant (28) avec leur extension longitudinale sortant de l'ouverture d'insertion (17) orientée au moins globalement parallèlement à la direction longitudinale de la bande de convoyage, de façon à ce que les rouleaux porteurs (20, 30) puissent être retirés de la fente de guidage et de maintien (26, 27) respective et insérée dans celle-ci sans que la bande de convoyage (31) qui s'y appuie doive être soulevée.

2. Châssis à rouleaux porteurs (1) selon la revendication 1, **caractérisé en ce que** le diamètre extérieur des rouleaux porteurs (20, 30) logés sur le cadre pivotant (28) est supérieur au diamètre extérieur des rouleaux porteurs latéraux (18, 19).

3. Châssis à rouleaux porteurs (1) selon l'une des revendications précédentes, **caractérisé en ce que** le diamètre extérieur des rouleaux porteurs (20, 30) logés sur le cadre pivotant (28) est de 200 à 400 mm, plus particulièrement de 230 à 350 mm, de préférence de 270 à 290 mm.

4. Châssis à rouleaux porteurs (1) selon l'une des revendications précédentes, **caractérisé en ce que** la distance entre les rouleaux porteurs (20, 30) logés sur le cadre pivotant (28) dans la direction transversale par rapport à l'axe de pivotement (29) et dans la direction longitudinale de la bande de convoyage (31) est de 50 à 200 mm, plus particulièrement de 75 à 150 mm, de préférence de 90 à 120 mm.

5. Châssis à rouleaux porteurs (1) selon l'une des revendications précédentes, **caractérisé en ce qu'**au moins les rouleaux porteurs (20, 30) logés sur le cadre pivotant (28) comprennent une surface augmentant l'adhérence et les frottements, de préférence une surface avec un matériau de type caoutchouc.

6. Châssis à rouleaux porteurs (1) selon l'une des revendications précédentes, **caractérisé en ce que** toutes les fentes de guidage et de maintien (11, 12, 15, 16, 26, 27) logeant chacune une extrémité d'axe (21) d'un rouleau porteur (18, 19, 20, 30) sont réalisées et disposées dans le châssis à rouleaux porteurs (1), avec leur extension longitudinale sortant de l'ouverture d'insertion (17), de manière orientée au moins globalement parallèlement à la direction longitudinale de la bande de convoyage.

7. Châssis à rouleaux porteurs (1) selon l'une des revendications précédentes, **caractérisé en ce que** l'axe de pivotement (29) du cadre pivotant (28) est logé dans le châssis à rouleaux porteurs (1) dans des fentes de guidage et de maintien (13, 14), qui sont réalisées et disposées, avec leur extension longitudinale sortant de l'ouverture d'insertion (17), au moins globalement parallèlement à la direction longitudinale de la bande de convoyage.

8. Châssis à rouleaux porteurs (1) selon l'une des revendications précédentes, **caractérisé en ce que** les fentes de guidage et de maintien (11 à 16) sont réalisées au moins partiellement chacune dans la partie de tête d'un élément de maintien, plus particulièrement une tôle de maintien (3 à 8), fixé au châssis à rouleaux porteurs (1).

9. Châssis à rouleaux porteurs (1) selon l'une des revendications précédentes, **caractérisé en ce que**, à chaque ouverture d'insertion (17) d'une fente de guidage et de maintien (11, 12, 15, 16, 26, 27) correspond un élément de sécurisation (23, 32) bloquant l'ouverture d'insertion (17) et empêchant le glissement d'une extrémité d'axe (21) d'un rouleau porteur (18, 19, 20, 30) inséré dans la fente de guidage et de maintien (11, 12, 15, 16, 26, 27) respective.
